# EUROPÄISCHE PATENTSCHRIFT

(11) **EP 2 767 417 B1**
(45) Veröffentlichungstag und Bekanntmachung des Hinweises auf die Patenterteilung: **03.04.2019**
(21) Anmeldenummer: 14001306.1
(22) Anmeldetag: 24.11.2012
(51) Int. Cl.: B60D 1/06, B60D 1/36, B60D 1/54, B60D 1/24, B60D 1/46

(54) **Anhängekupplung mit einer Positionierantriebanordnung**
hitch with a positioning drive assembly
Attelage doté d'un agencement d'entraînement de positionnement

(30) Priorität: 09.12.2011 DE 102011120652
(43) Veröffentlichungstag der Anmeldung: 20.08.2014
(62) Teilanmeldung aus: 12007931.4
(73) Patentinhaber: WESTFALIA - Automotive GmbH, 33378 Rheda-Wiedenbrück (DE)
(72) Erfinder: Thorsten, Roolf, 31542 Bad Nenndorf (DE)
(74) Vertreter: Patentanwälte Bregenzer und Reule Partnerschaftsgesellschaft mbB

(56) Entgegenhaltungen:
- DE-A1-102006 001 059
- DE-U- 7 233 868
- US-A1- 2010 013 188

## Beschreibung

Die Erfindung betrifft eine Anhängekupplung mit einer an einem Kraftfahrzeug angeordneten oder anordenbaren Halterung, an der ein Kupplungsarm mit einem Kuppelelement zum Eingriff in eine Kupplungsaufnahme einer Kupplung eines Anhängers mittels einer Lageranordnung beweglich gelagert ist, gemäß dem Oberbegriff des Anspruchs 1.

Eine derartige Anhängekupplung ist beispielsweise in DE 10 2006 001 059 A1 erläutert.

Aus DE 72 33 868 U ist eine Anhängekupplung bekannt, deren Kupplungsarm auf unterschiedliche Höhen anpassbar ist, so dass beispielsweise abhängig vom Beladungszustand des Anhängers oder des Zugfahrzeugs der Kupplungsarm verstellt werden kann. Die Handhabung bekannter Anhängekupplungen ist jedoch kompliziert, das heißt zunächst muss die Höhe des Kuppelelements eingestellt werden, bevor der Anhänger angekoppelt werden kann. Üblicherweise wird das Maul der Kupplung, die Kupplungs-Aufnahme, von oben her auf das Kuppelelement, in der Regel ein Kuppelelement, aufgesetzt.

Es ist daher die Aufgabe der vorliegenden Erfindung, eine einfach handhabbare Anhängekupplung bereitzustellen, die bequem mit einer Kupplung eines Anhängers verbunden werden kann, insbesondere einer so genannten Zugkugelkupplung.

Zur Lösung der Aufgabe ist eine Anhängekupplung gemäß der technischen Lehre des Anspruchs 1 vorgesehen.

Es ist auch vorteilhaft, wenn die Lageranordnung einer erfindungsgemäßen Anhängekupplung Bewegungsfreiheitgrade um mindestens zwei Drehachsen und/oder um mindestens eine Drehachse und eine Schiebeachse aufweist.

Es ist ein Grundgedanke der vorliegenden Erfindung, dass mittels der Lageranordnung der Kupplungsarm nicht nur in eine einzige Gebrauchsstellung gebracht werden kann, sondern auch innerhalb eines Stellbereichs um die Gebrauchsstellung herum, beispielsweise nach oben oder unten (in Z-Richtung) und/oder quer dazu (in Y-Richtung), eventuell auch in Fahrzeuglängsrichtung (in X-Richtung) verstellbar ist, so dass das Kuppelelement, zum Beispiel eine Kupplungskugel, in die Kupplungsaufnahme hinein positionierbar ist. Das muss der Bediener jedoch nicht von Hand tun, sondern er wird durch die Positionierantriebanordnung unterstützt, die den Kupplungsarm so positioniert, dass er in die Kupplungsaufnahme hinein gelangt.

Zwar wäre es prinzipiell bei einer Variante der Erfindung möglich, dass die Positionierantriebanordnung einen oder mehrere manuelle Antriebe, beispielsweise eine Kurbel und/oder einen Seilzug oder dergleichen umfasst. Bevorzugt ist jedoch ein motorisches Konzept, bei dem die Positionierantriebanordnung einen oder mehrere Motoren, beispielsweise Elektromotoren, pneumatische Antriebe, hydraulische Antriebe oder dergleichen andere fluidische Antriebe umfasst. Die Positionierantriebanordnung kann selbstverständlich auch eines oder mehrere Getriebe, beispielsweise Zahnradgetriebe, Seilzuggetriebe, Keilgetriebe oder dergleichen, einen Reibradantrieb oder dergleichen umfassen. Weiterhin kann ein Antriebsmotor der Positionierantriebanordnung über eine Getriebeanordnung mehrere Antriebsachsen antreiben.

Eine bevorzugte Ausführungsform sieht vor, dass der Kupplungsarm mittels der Lageranordnung beweglich zwischen der Gebrauchsstellung sowie auch einer Nichtgebrauchsstellung gelagert ist. Der Kupplungsarm ist in der Nichtgebrauchsstellung zum Fahrzeug hin verstellt, beispielsweise verborgen hinter einen Stoßfänger zurück verstellt. Somit hat also die Lageranordnung nicht nur die Funktion, das Kuppelelement, insbesondere eine Kupplungskugel, in einer Ausgestaltung der Erfindung in der oder in die Kupplungsaufnahme des Anhängers zu positionieren, sondern ermöglicht in vorteilhafter Weise, den Kupplungsarm bei Nichtgebrauch so zu verstellen, dass er nicht mehr stört, insbesondere die Bodenfreiheit des Kraftfahrzeugs nicht behindert.

An dieser Stelle sei bemerkt, dass der Begriff Kraftfahrzeug beispielsweise einen Personenkraftwagen, zum Beispiel mit einem Verbrennungsmotor und/oder einem Elektromotor, umfassen soll.

Bevorzugt umfasst die Lageranordnung mindestens ein Kugellager oder wird durch ein Kugellager gebildet. Die Lageranordnung kann selbstverständlich verschiedenartige Lager umfassen, beispielsweise mindestens ein Linearlager und/oder mindestens ein Kugellager und/oder mindestens ein Schwenklager oder dergleichen. Es versteht sich, dass auch andere Lagerkonzepte der Lageranordnung, beispielsweise Schiebelager und/oder Schwenk-Schiebelager und/oder mindestens ein Drehlager, insbesondere mehrere Drehlager mit zueinander winkeligen Drehachsen, und/oder kardanische Lagerungen oder dergleichen ohne weiteres möglich sind.

Es ist vorgesehen, dass der Kupplungsarm mehrteilig ist und einen mit der Lageranordnung an der Fahrzeug-Halterung beweglich gelagerten ersten Kupplungsarmabschnitt aufweist, an dem mittels eines Kupplungsarmlagers ein zweiter Kupplungsarmabschnitt beweglich gelagert ist. Es versteht sich, dass auch weitere Kupplungsarmabschnitte oder Kupplungsarmsegmente möglich sind. Die Positionierantriebanordnung umfasst zweckmäßigerweise mindestens einen dem Kupplungsarm-Lager zugeordneten Antrieb, zum Beispiel einen elektrischen Direktantrieb, ein Getriebe oder dergleichen, so dass der zweite und weitere Kupplungsarmabschnitt bezüglich des Kupplungsarmabschnitt, an dem er beweglich gelagert ist, motorisch verstellbar ist. Ein jeweiliger Kupplungsarmabschnitt kann gerade verlaufen und/oder Krümmungen aufweisen.

Bevorzugt sind die am Halter vorgesehene Lageranordnung und das mindestens eine Kupplungsarmlager so ausgestaltet, dass das Kuppelelement durch die Positionierantriebanordnung im Wesentlichen senkrecht zu einer oberen Scheitelebene der Kupplungsaufnahme einführbar ist. Man kann auch sagen, dass das Kuppelelement von unten in die Kupplungsaufnahme möglichst senkrecht einführbar ist. Dadurch ist es möglich, dass das Kuppelelement so optimal in die Kupplungsaufnahme eingeführt wird, dass es dort sicher verriegelbar ist und/oder nicht verkantet.

Weiterhin ist es vorteilhaft, wenn die Anhängekupplung eine Verriegelungseinrichtung zur Verriegelung des Kupplungsarms zumindest in der Gebrauchsstellung, vorzugsweise auch in der vorgenannten Nichtgebrauchsstellung, aufweist. Die Verriegelungseinrichtung umfasst zweckmäßigerweise eines oder mehrere Verriegelungselemente, das bzw. die in einer Verriegelungsstellung in Verriegelungsöffnung am Kupplungsarm und/oder an der Halterung eingreifen und so den Kupplungsarm verriegeln. Das mindestens eine Verriegelungselement kann beispielsweise durch einen Verriegelungsantrieb in die Verriegelungsstellung und/oder aus der Verriegelungsstellung in eine Freigabestellung, in der der Kupplungsarm beweglich ist, betätigbar sein.

Insbesondere während der Positionierung des Kupplungsarms um die Gebrauchsstellung herum, um das Kuppelelement in die Kupplungsaufnahme des Anhängers zu bewegen, ist es vorteilhaft, wenn ein Verriegelungsantrieb die Verriegelung des Kupplungsarms entriegelt hält.

Weiterhin ist es vorteilhaft, wenn das mindestens eine Verriegelungselement durch eine Federanordnung zumindest in die Verriegelungsstellung belastet ist. Dies bedeutet, dass das Verriegelungselement quasi automatisch verriegelt, auch wenn keine Betätigung beispielsweise durch einen Bediener oder den vorgenannten Verriegelungsantrieb, vorhanden ist.

Ein sensorisches Konzept ist ebenfalls zweckmäßig: bevorzugt hat die Anhängekupplung eine Sensoranordnung zur Ermittlung einer Position der Kupplungsaufnahme und/oder zur Erfassung, ob das Kuppelelement in der Kupplungsaufnahme verriegelt ist. Die Sensoranordnung kann einen oder mehrere Sensoren umfassen. Die Sensoranordnung kann beispielsweise an Bord eines Steuergeräts der Anhängekupplung sein. Die Sensoranordnung kann aber auch abseits des Steuergeräts angeordnete Sensoren umfassen, beispielsweise oben an dem Kuppelelement, das dann in die Kupplungsaufnahme eingreift, so dass dieser Sensor erfassen kann, ob sich das Kuppelelement in der Kupplungsaufnahme befindet. Auch die Abtastung einer Verriegelung bzw. die sensorische Erfassung einer Verriegelung der Kupplung des Anhängers ist zweckmäßig. Beispielsweise kann mittels eines Tastschalters, eines Näherungssensors, eines optischen Sensors oder dergleichen erfasst werden, ob ein Riegel, insbesondere ein Haltebacken, der Kupplung des Anhängers in der Verriegelungsstellung ist.

Die Sensoranordnung umfasst in einer weiter bevorzugten Ausführungsform der Erfindung einen am Kupplungsarm, insbesondere am Kuppelelement, angeordneten Sensor. Der Sensor kann beispielsweise eine RFID-Leseeinrichtung umfassen, um zu erkennen, ob sich das Kuppelelement in der Kupplungsaufnahme befindet. Auf diesem Weg ist sogar erfassbar, ob die Anhängekupplung an einen Anhänger angekoppelt werden soll, für den sie zugelassen ist. Dies kann auch als eine Sicherheitsmaßnahme dienen. Wenn beispielsweise auch an der anhängerseitigen Kupplung Maßnahmen getroffen sind, die eine automatische Kupplung erleichtern, kann über einen RFID-Transponder an der anhängerseitigen Kupplung sichergestellt werden, dass nur geeignete Anhänger an die erfindungsgemäße Anhängekupplung angekuppelt werden.

Bevorzugt hat die erfindungsgemäße Anhängekupplung ein Steuergerät zur Ansteuerung der Positionierantriebanordnung zum Positionieren des Kuppelelements in der Kupplungsaufnahme. Das Steuergerät kann, wie gesagt, zumindest Teile der Sensoranordnung umfassen, beispielsweise einen oder mehrere Sensoren, die die Lage des Kupplungsarms relativ zum fahrzeugseitigen Lager erfassen (Näherungsschalter oder dergleichen).

Das Steuergerät kann selbstverständlich auch einen oder mehrere Anschlüsse für ein Sensorsignal der Sensoranordnung umfassen, beispielsweise elektrische Anschlüsse, in die Leitungen eines Sensors einsteckbar sind, oder dergleichen.

Die Positionierantriebanordnung ist vorzugsweise zum Antreiben des Kupplungsarms in die Gebrauchsstellung ausgestaltet, wenn das Kuppelelement bereits in die Kupplungsaufnahme des Anhängers eingegriffen hat, insbesondere wenn die Kupplung des Anhängers das Kuppelelement bereits verriegelt hat. Dann ist es möglich, dass der Kupplungsarm zwar nahe bei der Gebrauchsstellung ist, diese jedoch noch nicht erreicht hat. Die erfindungsgemäße Anhängekupplung, insbesondere deren Kuppelelement, hat dann den Anhänger sozusagen "eingefangen". Die Kupplung des Anhängers kann beispielsweise höher oder tiefer als das Kuppelelement der erfindungsgemäßen Anhängekupplung in der Gebrauchsstellung und/oder mit einem Versatz in Fahrzeugquerrichtung zu dem Kuppelelement stehen. Die Positionierantriebanordnung weist zweckmäßigerweise ausreichende Kraft auf, um dann den Kupplungsarm in die Gebrauchsstellung zu verstellen, z.B. nach oben oder unten zu drehen und/oder zu schieben und dabei die Kupplung des Anhängers mitzunehmen. Dabei wird Kupplung des Anhängers beispielsweise angehoben oder abgesenkt. Es ist auch möglich, dass das Zugfahrzeug während dieses Vorgangs langsam fährt.

Ein an sich eigenständiges innovatives Konzept ist es, wenn das Steuergerät die Positionierantriebanordnung so lange zur Positionierung des Kuppelelements in Richtung der Kupplungsaufnahme ansteuert, beispielsweise durch kontinuierliche Bestromung eines Antriebsmotors, aber auch durch Wiederholungszyklen oder "Nachtakten", beispielsweise wiederholte Bestromung des Antriebsmotors, auch wenn das Kuppelelement bereits in die Kupplungsaufnahme vollständig eingreift, das heißt an sich schon die Kopplung zwischen Zugfahrzeug und Anhänger gegeben ist, der Kupplungsarm jedoch noch nicht die Gebrauchsstellung eingenommen hat. Dies kann beispielsweise dann der Fall sein, wenn die Kupplungsaufnahme tiefer liegt als die Lage des Kuppelelements in seiner Gebrauchsstellung. Auf diesem Wege kann beispielsweise bewirkt werden, das die vorgenannte Verriegelungseinrichtung tatsächlich verriegelt, insbesondere wenn das mindestens eine Verriegelungselement in die Verriegelungsstellung federbelastet ist.

Das Steuergerät ist zweckmäßigerweise zum Senden eines Steuersignals an das Kraftfahrzeug ausgestaltet, beispielsweise an ein Bordnetz. Das Steuersignal instruiert das Kraftfahrzeug beispielsweise zu einer langsamen Fahrt, bis der Kupplungsarm infolge der weiteren Ansteuerung der Positionierantriebanordnung die Gebrauchsstellung erreicht. Somit fährt das Kraftfahrzeug also noch sehr langsam, während die Positionierantriebanordnung den Kupplungsarm nachstellt, bis er die Gebrauchsstellung erreicht. Insbesondere wenn das Gespann ungünstig steht, kann es nämlich ansonsten sein, dass das an Ort und Stelle verbleibende Gespann aus Kraftfahrzeug und Anhänger die Positionierantriebanordnung quasi blockiert oder deren Kraft nicht ausreicht, um den Kupplungsarm entgegen der Kräfte, die auf ihn einwirken, in Richtung der Gebrauchsstellung zu verstellen, bis beispielsweise die Verriegelung des Kupplungsarms greift.

Das Steuergerät ist zweckmäßigerweise zur Ausgabe mindestens eines Meldesignals und/oder mindestens eines Steuersignals an das Kraftfahrzeug ausgestaltet. Beispielsweise hat das Steuergerät eine Busschnittstelle oder eine sonstige Schnittstelle, um mit dem Bordnetz des Kraftfahrzeugs zu kommunizieren.

Das mindestens eine Meldesignal umfasst beispielsweise eine Meldung über einen vollständigen Eingriff des Kupplungselements in die Kupplungsaufnahme. Das Meldesignal kann aber auch eine erfolgte Verriegelung des Kupplungselements in der Kupplungsaufnahme signalisieren. Weiterhin kann das Meldesignal eine Position des Kupplungsarms, beispielsweise die Gebrauchsstellung, die Nichtgebrauchsstellung oder dergleichen oder auch eine dazwischen liegende Stellung, umfassen. Das Steuersignal wiederum umfasst beispielsweise die vorgenannte Geschwindigkeitsinstruktion an das Kraftfahrzeug, das dieses dazu instruiert, die Fahrgeschwindigkeit solange unterhalb einer Grenzgeschwindigkeit zu halten, beispielsweise einer Schrittgeschwindigkeit, bis der Kupplungsarm seine Gebrauchsstellung erreicht hat, nachdem das Kuppelelement schon in der Kupplungsaufnahme aufgenommen ist, eventuell dort sogar bereits verriegelt ist.
- Figur 1: eine erfindungsgemäße Anhängekupplung mit einem kugelgelenkartigen fahrzeugseitigen Lager von schräg hinten unten,
- Figur 2a: eine Zusammenschau der Anhängekupplung gemäß Figur 1 in Gebrauchsstellung sowie eines Bediengeräts zur Bedienung der Anhängekupplung,
- Figur 2b: die Anordnung gemäß Figur 2a, wobei der Kupplungsarm in einer Zwischenstellung zwischen der Gebrauchsstellung und einer in
- Figur 2c: dargestellten Nichtgebrauchsstellung ist,
- Figur 3a: eine perspektivische Schrägansicht der Anhängekupplung gemäß der vorstehenden Figuren, wobei diese auf einem Verstellweg in Richtung einer Kupplungsaufnahme einer Kupplung eines Anhängers dargestellt ist,
- Figur 3b: die Anhängekupplung gemäß Figur 3a, jedoch mit bereits in der Kupplungsaufnahme des Anhängers befindlichem Kuppelelement,
- Figur 4: eine schematische Seitenansicht einer Verriegelung der Anhängekupplung,
- Figur 5a: eine schematische Ansicht eines alternativen Ausführungsbeispiels einer erfindungsgemäßen Anhängekupplung, die teilweise in Richtung einer Kupplungsaufnahme verstellt ist,
- Figur 5b: die Anhängekupplung gemäß Figur 5a, jedoch bereits in die Kupplungsaufnahme hinein verstellt, und
- Figur 6: ein elektrisches Blockschaltbild eines Steuergeräts der Anhängekupplung gemäß Figuren 1-4 sowie des Bediengeräts gemäß Figuren 2a-2c.

Eine Anhängekupplung 10 ist beispielsweise an einem hinteren Querträger 91 eines Kraftfahrzeugs 90 befestigt. Eine Halterung 11 der Anhängekupplung 10 umfasst hier nicht näher beschriebene Halteelemente 12, 13, die am hinteren Querträger 91 befestigt sind, beispielsweise angeschweißt oder angeschraubt. Die Halterung 11 umfasst ferner eine Lageranordnung 14, die beispielsweise ein Kugellager 20 oder ein in der Art eines Kugellagers funktionierendes Lager umfasst. Beispielsweise umfasst die Lageranordnung 14 ein mit der Halterung 11 verbundenes, quasi fahrzeugseitiges Lagerteil 15, das in eine Lageraufnahme 16 eines Lagerteils 17 eingreift. Das Lagerteil 17 trägt einen Kupplungsarm 18, der vom Lagerteil 17 absteht. Das fahrzeugseitige Lagerteil 15 ist beispielsweise außenseitig kugelig, während die Lageraufnahme 16 in der Art einer Hohlkugel ausgestaltet ist.

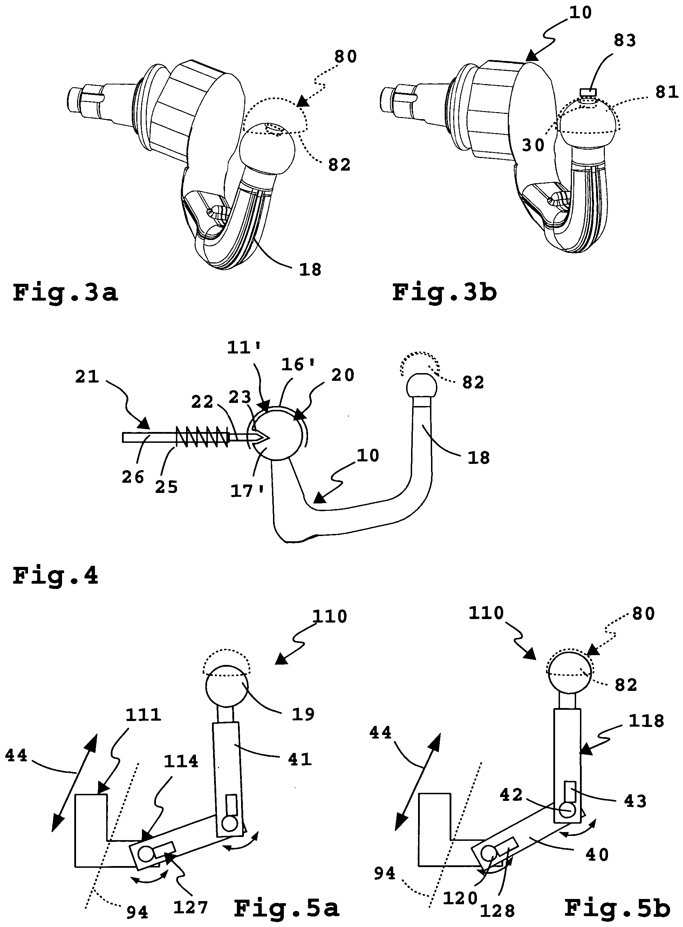

Es versteht sich, dass wie in Figur 4 schematisch angedeutet, ein Lagerteil 17', das den Kupplungsarm 18 trägt, auch in einer an der fahrzeugseitigen Halterung 11' angeordneten Lageraufnahme 16' gelagert sein kann.

Es versteht sich, dass auch andere Lagerkonzepte, beispielsweise Schwenk-Schiebelager und/oder mindestens ein reines Drehlager und/oder kardanische Lagerungen und/oder Schiebelager oder dergleichen bei der im Ausführungsbeispiel dargestellten oder jeder anderen erfindungsgemäßen Anhängekupplung ohne weiteres möglich sind. Jedenfalls erweist es sich als vorteilhaft, wenn bei einer erfindungsgemäßen Anhängekupplung die fahrzeugseitige Lageranordnung, wie bei der Lageranordnung 14 der Fall, eine Schwenkdrehbarkeit des Kupplungsarms um mehrere Bewegungsfreiheitgrade, z.B. zueinander winkelige, insbesondere senkrechte, Drehachsen D1, D2 und D3, ermöglicht.

Der Kupplungsarm 18 trägt an seinem freien, vom Lagerteil 17 entfernten Endbereichen ein Kuppelelement 19, beispielsweise eine Kupplungskugel. Es versteht sich, dass auch andersartige Kuppelelemente, zum Beispiel polygonale Kuppelelemente, möglich sind.

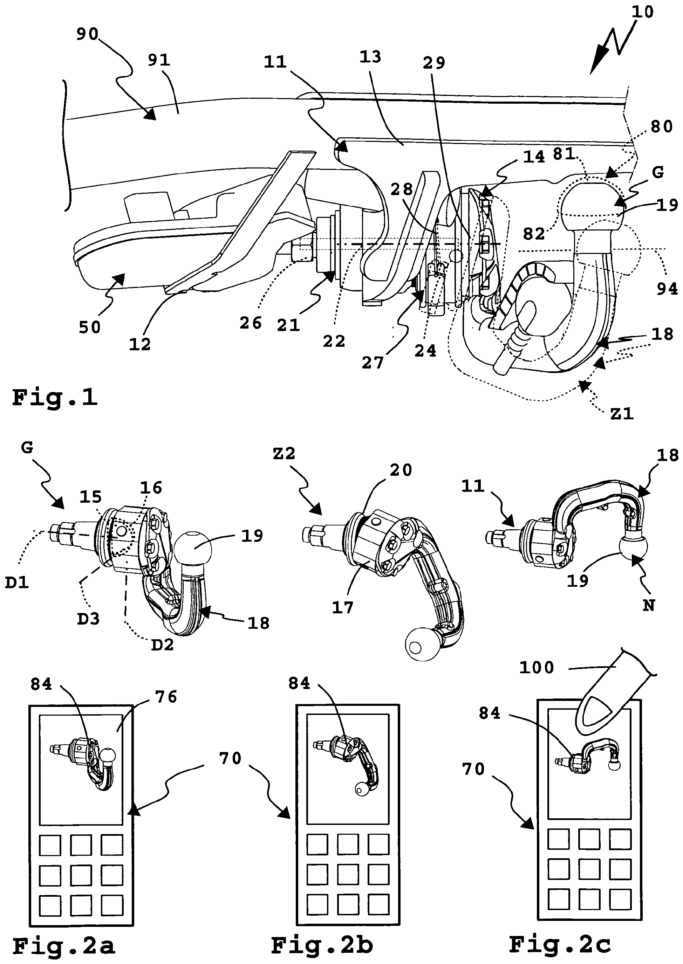

Der Kupplungsarm 18 kann mittels der Lageranordnung 14 zwischen einer in Figur 1 in durchgezogenen Linien sowie in Figur 2a dargestellten Gebrauchsstellung G über mehrere Zwischenstellungen, von denen exemplarisch Zwischenstellungen Z1 und Z2 dargestellt sind, in eine Nichtgebrauchsstellung N verstellt werden, bei der sich der Kupplungsarm 18 im Wesentlichen verdeckt nahe beim Kraftfahrzeug 90, insbesondere dessen Karosserie, befindet. Beispielsweise ist der Kupplungsarm 18 in der Nichtgebrauchsstellung N hinter einen Stoßfänger 94 des Kraftfahrzeugs 90 zurück verstellt, so dass er von hinten oben nicht sichtbar ist.

Der Kupplungsarm 18 kann mittels einer Verriegelungseinrichtung 21 in seiner Gebrauchsstellung G und der Nichtgebrauchsstellung N verriegelt werden. Beispielsweise greift ein Verriegelungselement 22, zum Beispiel ein Verriegelungsbolzen, in einer Verriegelungsstellung, die in Figur 4 dargestellt ist, in eine Verriegelungsaufnahme oder Verriegelungsöffnung 23 am Lagerteil 17 ein oder beaufschlagt Formstücke 24, zum Beispiel Kugeln, so, dass sie in eine oder mehrere Verriegelungsöffnungen 23 am Lagerteil 17 eingreifen.

Selbstverständlich wäre auch eine Verriegelung vom Kupplungsarm her möglich, das heißt dass beispielsweise am oder im Kupplungsarm oder dessen Lagerteil eines oder mehrere bewegliche Verriegelungselemente gelagert sind, die den Kupplungsarm relativ zum fahrzeugseitigen Halter verriegeln können.

Das Verriegelungselement 22 ist durch eine Feder 25 in die Verriegelungsstellung beaufschlagt. Ein in Figur 4 schematisch dargestellter, in Figur 1 von außen sichtbarer Verriegelungsantrieb 26 kann das Verriegelungselement 22 in Richtung der Entriegelungsstellung antreiben, entgegen der Kraft der Feder 25.

Weiterhin umfasst die Anhängekupplung 10 eine Positionierantriebanordnung 27 mit einem Antrieb 28, der einen oder mehrere Motoren, vorteilhaft auch mindestens ein Getriebe, zum Beispiel ein Seilzug-Getriebe 29, oder dergleichen umfasst. Jedenfalls ist es möglich, den Kupplungsarm 18 mit dem Antrieb 28 zwischen der Gebrauchsstellung G und der Nichtgebrauchsstellung N zu verstellen, aber auch darüber hinaus, was nachfolgend noch deutlich wird.

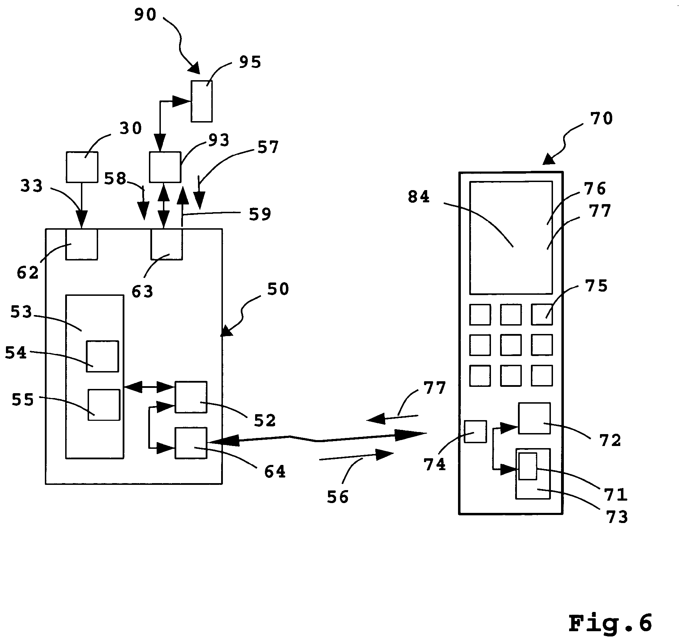

Die Positionierantriebanordnung 27 wird durch ein Steuergerät 50 angesteuert, von dem ein Blockschaltbild in Figur 6 dargestellt ist. Das Steuergerät 50 ist zweckmäßigerweise gekapselt und/oder in einem Gehäuse angeordnet, so dass es vor Umwelteinflüssen geschützt ist.

Das Steuergerät 50 hat beispielsweise einen Mikroprozessor 52 und einen Speicher 53, wobei der Mikroprozessor 52 in dem Speicher 53 gespeicherte Programme, beispielsweise ein Positionier-Programm 54 zum Positionieren des Kupplungsarms 18 und ein Kommunikationsprogramm 55 zur Kommunikation mit einem Bordnetz 93 des Kraftfahrzeugs 90, ausführen kann.

Zweckmäßigerweise umfasst das Steuergerät 50 eine Kommunikationsschnittstelle 63, beispielsweise eine Bus-Schnittstelle, um mit dem Bordnetz 93 zu kommunizieren. Somit kann das Steuergerät 50 vom Bordnetz 93 Steuerbefehle erhalten und/oder Steuerbefehle an das Bordnetz 93 senden, aber auch Meldungen an das Bordnetz 93 ausgeben und/oder Meldungen von dem Bordnetz 93 erhalten.

So erhält das Steuergerät 50 vorteilhaft vom Bordnetz 93 eine Geschwindigkeitsinformation 57, so dass es die Positionierantriebanordnung 27 nur dann zu einem Verstellen des Kupplungsarms 18 ansteuert, wenn das Kraftfahrzeug 90 steht oder allenfalls langsam fährt. Das wird später noch deutlich.

Auch in umgekehrter Richtung, das heißt vom Steuergerät 50 zum Bordnetz 93, ist eine Kommunikation zweckmäßig, beispielsweise um ein Blockiersignal 58 an das Bordnetz 93 zu senden, dass nämlich beispielsweise ein elektronisches Stabilisierungsprogramm oder ein Motorsteuergerät 95 nur dann ein Fahren des Kraftfahrzeugs 90 zulässt, wenn die Anhängekupplung 10 ihre Gebrauchsstellung G einnimmt.

Das Steuergerät 50 weist zudem noch eine Sensorschnittstelle 62 zur Kommunikation mit einem Sensor 30, beispielsweise einer RFID-Leseeinrichtung, auf, so dass das Steuergerät 50 von dem Sensor 30 ein Sensorsignal 33 erhalten kann.

Die Anhängekupplung 10 ermöglicht ein automatisches Ankuppeln an eine Kupplung 81 eines Anhängers 80 die Kupplung 81 ist im Wesentlichen schematisch dargestellt und umfasst beispielsweise eine Kupplungsaufnahme 82, in die das Kuppelelement 19 in einer Koppelstellung eingreift, so dass eine an sich bekannte Kugelgelenkige Lagerung der Kupplungsaufnahme 82 an dem Kuppelelement 19 gegeben ist. Die Positionierarbeit ist jedoch bei der erfindungsgemäßen Anhängekupplung wesentlich erleichtert, da nämlich das Steuergerät 50 die Positionierantriebanordnung 27 so ansteuert, dass das Kuppelelement 19 wie von selbst in die Kupplungsaufnahme 82 findet.

Zum Aufsuchen bzw. Ermitteln der Position der Kupplungsaufnahme 82 sind verschiedenartige Methoden möglich, beispielsweise optische Messungen, Erfassung nach einem magnetischen Prinzip, auch in Kombination. Vorliegend ist die Erfassung so getroffen, dass ein RFID-Transponder 83 an der Kupplung 81, vorzugsweise an der Kupplungsaufnahme 82, insbesondere an deren oberem Scheitelpunkt, angeordnet ist, der von dem Sensor 30 ortbar und ermittelbar ist. Beispielsweise erfasst der Sensor 30 eine Signalstärke des RFID-Transponders 83, um dessen Position zu ermitteln.

Es ist jedoch auch ein Bedienkonzept mit einem externen Bediengerät 70, beispielsweise einem Mobiltelefon, Smartphone oder dergleichen denkbar, das über eine Bediengerät-Schnittstelle 64, z.B. eine Funkschnittstelle (eine kabelgebundene Kommunikation ist alternativ möglich), mit dem Steuergerät 50 kommuniziert, um letztlich die Positionierantriebanordnung 27 zum Positionieren des Kupplungselements 18 in der Kupplungsaufnahme 82 anzusteuern. Beispielsweise können an einer grafischen Bedienoberfläche 76 und/oder mittels Eingabemitteln 75, zum Beispiel Tasten oder dergleichen, Steuerbefehle an ein Steuerprogramm 71 des Bediengeräts 70 gegeben werden. Das Steuerprogramm 71 ist beispielsweise in einem Speicher 73 des Bediengeräts 70 gespeichert und kann von einem Mikroprozessor 72 ausgeführt werden.

Über eine Kommunikationsschnittstelle 74 kommuniziert dann das Bediengeräts 70 mit dem Steuergerät 50, zum Beispiel drahtlos. Die Kommunikationsschnittstelle 74 umfasst beispielsweise eine WLAN-Schnittstelle, eine Bluetooth-Schnittstelle oder dergleichen. Dabei sendet dann das Bediengerät 70 von dem Steuerprogramm 71 erzeugte Steuerbefehle 77 an das Steuergerät 50, welches entsprechend der so erhaltenen Instruktionen die Positionierantriebanordnung 27 so ansteuert, dass sie den Kupplungsarm 18 um die Achsen D1, D2 und D3 schwenk-antreibt. Die Bedienoberfläche 76 ist eine grafische Bedienoberfläche, d.h. dass sie beispielsweise zur Anzeige eines Symbols 84 des Kupplungsarms 18, das dessen Position in Realität wiedergibt, ausgestaltet ist.

Über ein Meldesignal 56 meldet das Steuergerät 50 beispielsweise die jeweilige Position des Kupplungsarms 18 an das Bediengerät 70, welches die Position des Symbols 84 entsprechend nachführt, so dass der Bediener sieht, wo der Kupplungsarm 18 gerade ist. Der Bediener kann beispielsweise mittels seines Fingers 100 die jeweilige Position des Kupplungsarms 18 vorwählen oder beeinflussen. Dazu muss der Bediener lediglich den Finger 100 über einen Bildschirm 78 des Bediengeräts 70 führen.

Ein innovatives Konzept sieht vor, dass das Steuergerät 50 quasi die Verriegelung des Kupplungsarms 18 überwacht und gegebenenfalls die Positionierantriebanordnung 27 zu einem Nachstellen des Kupplungsarms 18 in Richtung der Gebrauchsstellung G ansteuert, bis die Gebrauchsstellung G erreicht ist.

Beispielsweise kann eine Situation gegeben sein, in der das Kuppelelement 19 zwar bereits vollständig in der Kupplungsaufnahme 82 aufgenommen ist, was beispielsweise sensorisch erfassbar ist, zum Beispiel mittels des Sensors 30. Selbst die Verriegelung der Kupplung 81 kann schon abgeschlossen sein. Allerdings ist es möglich, aufgrund beispielsweise einer ungünstigen Stellung des Gespanns bestehend aus Kraftfahrzeug 90 und Anhänger 80, dass die Gebrauchsstellung G dann noch nicht erreicht ist. Die Positionierantriebanordnung 27 erhält dann vom Steuergerät 50 weiter Befehle, in Richtung der Gebrauchsstellung G nachzustellen.

Gleichzeitig sendet das Steuergerät 50 vorteilhaft über die Bordnetz-Kommunikationsschnittstelle 63 eine Instruktion, also ein Steuersignal 59, an das Bordnetz 93, zunächst nur langsam zu fahren, bis die Gebrauchsstellung G erreicht ist. Dabei ist es auch möglich, dass vom Steuergerät 50 noch ein Zeitfenster überwacht wird, d.h. dass beispielsweise nur eine kurze Zeit einer langsamen Fahrt des Kraftfahrzeugs überhaupt möglich ist. Wenn dann der Kupplungsarm 18 noch immer nicht in der Gebrauchsstellung G ist, sendet das Steuergerät 50 einen Halte-Befehl an das Bordnetz 93, so dass das Kraftfahrzeug 90 stehen bleibt.

Selbstverständlich ist auch eine sensorische Überwachung der Verriegelung der Verriegelungseinrichtung 21 zweckmäßig, das heißt, dass beispielsweise das Steuergerät 50 erst dann einen Fahrbetrieb des Kraftfahrzeugs 90 freigibt (zum Beispiel über die Bordnetz-Kommunikationsschnittstelle 63, wenn die Verriegelungseinrichtung 21 in der Verriegelungsstellung ist.

Ein in Figur 5 dargestellter Kupplungsarm 118 einer Anhängekupplung 110 ist mehrteilig und umfasst einen Kupplungsarmabschnitt 40 und einen Kupplungsarmabschnitt 41, an dessen freiem Ende ein Kuppelelement 19 angeordnet ist. Der Kupplungsarmabschnitt 40 ist mittels einer Lageranordnung 114 beweglich an einer Halterung 111 gelagert. Der Kupplungsarmabschnitt 41 ist mittels eines Kupplungsarmlagers 42, z.B. eines Drehlagers, insbesondere eines Kugellagers oder eines Schwenklagers, beweglich am Kupplungsarmabschnitt 40 gelagert.

Mittels einer Positionierantriebanordnung 127 kann der Kupplungsarm 118 in die Kupplungsaufnahme 82 hinein positioniert werden.

Die Positionierantriebanordnung 127 umfasst einen Antrieb 128, der einem Schwenklager 120 der Lageranordnung 114 zugeordnet ist, z.B. dort direkt angeordnet ist und/oder über ein Getriebe zwischen den Teilen 111 und 40 wirkt, und den Kupplungsarmabschnitt 40 relativ zur Halterung 111 verstellt. Dem Kupplungsarmlager 42 ist ein Armantrieb 43 zugeordnet, der den Kupplungsarmabschnitt 41 relativ zum dem Kupplungsarmabschnitt 40 verstellt. Ein Pfeil 44 soll andeuten, dass neben dem Schwenklager 20 und dem Kupplungsarmlager 42 auch weitere Lager an der Halterung 111 für den Kupplungsarm 118 vorgesehen sein können, z.B. ein Linearlager zum Verstellen des Kupplungsarms 118 in Fahrzeugquerrichtung.

## Patentansprüche

1. Anhängekupplung mit einer an einem Kraftfahrzeug (90) angeordneten oder anordenbaren Halterung (11; 111), an der ein Kupplungsarm (18; 118) mit einem Kuppelelement (19) zum Eingriff in eine Kupplungsaufnahme (82) einer Kupplung (81) eines Anhängers (80) mittels einer Lageranordnung (14; 114) beweglich gelagert ist, wobei der Kupplungsarm (18; 118) in einer Gebrauchsstellung (G) nach hinten vor das Kraftfahrzeug (90) zum Ankuppeln des Anhängers (80) vorsteht, wobei die Lageranordnung (14; 114) im Bereich der Gebrauchsstellung (G) mindestens einen Schwenkfreiheitsgrad und/oder mindestens einen Linear-Verstellfreiheitsgrad zu einer Verstellung des Kupplungsarms (18; 118) zu einer Positionierung des Kuppelelements (19) zu der Kupplungsaufnahme (82) aufweist, und wobei die Anhängekupplung eine Positionierantriebanordnung (21; 127) zum Antreiben des Kupplungsarms (18; 118) und Positionieren des Kuppelelements (19) in die Kupplungsaufnahme (82) des Anhängers (80) aufweist, **dadurch gekennzeichnet, dass** der Kupplungsarm (18; 118) mehrteilig ist und einen mit der Lageranordnung (14; 114) an der Fahrzeug-Halterung (11; 111) beweglich gelagerten ersten Kupplungsarmabschnitt (40) aufweist, an dem mittels eines Kupplungsarmlagers (42) ein zweiter Kupplungsarmabschnitt (41) beweglich gelagert ist.

2. Anhängekupplung nach Anspruch 1, **dadurch gekennzeichnet, dass** der Kupplungsarm (18; 118) mittels der Lageranordnung (14; 114) beweglich zwischen der Gebrauchsstellung (G) und einer Nichtgebrauchsstellung gelagert ist, wobei der Kupplungsarm (18; 118) in der Nichtgebrauchsstellung zum Kraftfahrzeug (90) hin, insbesondere hinter einen Stoßfänger (94) zurück, verstellt ist.

3. Anhängekupplung nach Anspruch 1 oder 2, **dadurch gekennzeichnet, dass** die Lageranordnung (14; 114) ein Kugellager (20) umfasst.

4. Anhängekupplung nach einem der vorhergehenden Ansprüche, **dadurch gekennzeichnet, dass** der mindestens eine zweite Kupplungsarmabschnitt (41) mittels eines Armantriebs (43), der insbesondere einen Bestandteil der Positionierantriebanordnung (21; 127) bildet, relativ zu dem ersten Kupplungsarmabschnitt (40) antreibbar ist und/oder dass die Lageranordnung (14; 114) und das Kupplungsarmlager (42) so ausgestaltet sind, dass das Kuppelelement (19) durch die Positionierantriebanordnung (21; 127) im Wesentlichen senkrecht zu einer oberen Scheitelebene der Kupplungsaufnahme (82) und/oder im wesentlichen senkrecht von unten in die Kupplungsaufnahme (82) einführbar ist.

5. Anhängekupplung nach einem der vorhergehenden Ansprüche, **dadurch gekennzeichnet, dass** sie eine Verriegelungseinrichtung (21) zur Verriegelung des Kupplungsarms (18; 118) zumindest in der Gebrauchsstellung (G) aufweist, wobei die Verriegelungseinrichtung (21) mindestens ein Verriegelungselement (22) aufweist, das in einer Verriegelungsstellung in eine am Kupplungsarm (18; 118) und/oder der Halterung (11; 111) vorgesehene Verriegelungsöffnung (23) im Sinne eines Verriegelns eingreift.

6. Anhängekupplung nach Anspruch 5, **dadurch gekennzeichnet, dass** das mindestens eine Verriegelungselement (22) durch eine Federanordnung (25) in die Verriegelungsstellung belastet ist und/oder dass sie einen motorischen Verriegelungsantrieb zum Antreiben des mindestens einen Verriegelungselements (22), insbesondere zum Halten des mindestens einen Verriegelungselements (22) in einer Entriegelungsstellung während der Positionierung des Kuppelelements (19) zu der Kupplungsaufnahme (82), aufweist.

7. Anhängekupplung nach einem der vorhergehenden Ansprüche, **dadurch gekennzeichnet, dass** sie eine Sensoranordnung zur Ermittlung einer Position der Kupplungsaufnahme (82) und/oder zur Erfassung, ob das Kuppelelement (19) in der Kupplungsaufnahme (82) verriegelt ist, aufweist.

8. Anhängekupplung nach Anspruch 7, **dadurch gekennzeichnet, dass** die Sensoranordnung einen an dem Kupplungsarm (18; 118), insbesondere dem Kuppelelement (19), angeordneten Sensor (30), insbesondere eine RFID-Leseeinrichtung, zur Positionserfassung der Kupplungsaufnahme (82) angeordnet ist.

9. Anhängekupplung nach einem der vorhergehenden Ansprüche, **dadurch gekennzeichnet, dass** sie ein Steuergerät (50) zur Ansteuerung der Positionierantriebanordnung (21; 127) zum Positionieren des Kuppelelements (19) in der Kupplungsaufnahme (82) aufweist.

10. Anhängekupplung nach Anspruch 9, **dadurch gekennzeichnet, dass** das Steuergerät (50) zumindest Teile der Sensoranordnung umfasst und/oder einen Anschluss für ein Sensorsignal der Sensoranordnung aufweist.

11. Anhängekupplung nach Anspruch 9 oder 10, **dadurch gekennzeichnet, dass** das Steuergerät (50) die Positionierantriebanordnung (21; 127) zur Positionierung des Kuppelelements (19) in Richtung der Kupplungsaufnahme (82) solange, insbesondere in Wiederholungszyklen und/oder im Sinne eines Nachtaktens, ansteuert, nachdem das Kuppelelement (19) bereits in die Kupplungsaufnahme (82) vollständig eingreift, bis der Kupplungsarm (18; 118) die Gebrauchsstellung (G) einnimmt.

12. Anhängekupplung nach einem der Ansprüche 9 bis 11, **dadurch gekennzeichnet, dass** das Steuergerät (50) zum Senden eines Steuersignals (59) an das Kraftfahrzeug (90) ausgestaltet ist, das das Kraftfahrzeug (90) zu einer langsamen Fahrt instruiert, bis der Kupplungsarm (18; 118) infolge der weiteren Ansteuerung der Positionierantriebanordnung (21; 127) die Gebrauchsstellung (G) erreicht.

13. Anhängekupplung nach einem der Ansprüche 9 bis 12, **dadurch gekennzeichnet, dass** das Steuergerät (50) zur Ausgabe mindestens eines Meldesignals und/oder mindestens eines Steuersignals (59) an das Kraftfahrzeug (90) und/oder zum Empfang mindestens eines Meldesignals und/oder mindestens eines Steuersignals (58) von dem Kraftfahrzeug (90) ausgestaltet ist, wobei das mindestens eine Meldesignal zweckmäßigerweise eine Meldung über einen vollständigen Eingriff des Kuppelelements (19) in die Kupplungsaufnahme (82) und/oder einer erfolgten Verriegelung des Kuppelelements (19) in der Kupplungsaufnahme (82) und/oder eine Position des Kupplungsarms, insbesondere die Gebrauchsstellung (G), umfasst.

14. Anhängekupplung nach einem der vorhergehenden Ansprüche, **dadurch gekennzeichnet, dass** die Positionierantriebanordnung (21; 127) zum Antreiben des Kupplungsarms (18; 118) in die Gebrauchsstellung (G) ausgestaltet ist, wenn das Kuppelelement (19) bereits in die Kupplungsaufnahme (82) des Anhängers (80) eingegriffen hat.

## Claims

1. Trailer coupling with a mounting (11; 111) which is or may be fitted to a motor vehicle (90) and on which is movably mounted a coupling arm (18; 118) with a coupling element (19) for engagement in a coupling seating (82) of a coupling (81) of a trailer (80) by means of a bearing assembly (14; 114), wherein the coupling arm (18; 118), in a position of use (G), protrudes to the rear beyond the motor vehicle (90) for attaching the trailer (80),wherein the bearing assembly (14; 114) has in the area of the position of use (G) at least a degree of freedom to pivot and/or at least a degree of freedom of linear adjustment for adjusting the coupling arm (18; 118) for a positioning of the coupling element (19) relative to the coupling seating (82), and wherein the trailer coupling has a positioning device (21; 127) for driving the coupling arm (18; 118) and positioning the coupling element (19) in the coupling seating (82) of the trailer (80), **characterised in that** the coupling arm (18; 118) is multi-part and has a first coupling arm section (40) movably mounted with the bearing assembly (14; 114) on the vehicle mounting (11; 111) and on which a second coupling arm section (41) is movably mounted by means of a coupling arm bearing (42).

2. Trailer coupling according to claim 1, **characterised in that** the coupling arm (18; 118) is mounted by means of the bearing assembly (14; 114) so as to be movable between the position of use (G) and an inoperative position, wherein the coupling arm (18; 118) in the inoperative position is shifted towards the motor vehicle (90), in particular backwards behind a bumper (94),

3. Trailer coupling according to claim 1 or 2, **characterised in that** the bearing assembly (14; 114) includes a ball bearing (20).

4. Trailer coupling according to any of the preceding claims **characterised in that** the second coupling arm section or sections (41) may be driven relative to the first coupling arm section (40) by means of an arm drive (43) which forms in particular a part of the positioning drive assembly (21; 127), and/or that the bearing assembly (14; 114) and the coupling arm bearing (42) are so designed that the coupling element (19) may be introduced into the coupling seating (82) by means of the positioning drive assembly (21; 127), substantially perpendicular to an upper apex level of the coupling seating (82) and/or substantially perpendicular from below.

5. Trailer coupling according to any of the preceding claims **characterised in that** it has a locking device (21) for locking the coupling arm (18; 118) at least in the position of use (G), wherein the locking device (21) has at least one locking element (22) which, in a locking position, engages in a locking hole (23) provided on the coupling arm (18; 118) and/or the mounting (11; 111) for the purpose of locking.

6. Trailer coupling according to claim 5, **characterised in that** the locking element or elements (22) is or are biased towards the locking position by a spring assembly (25), and/or that it has a motorised locking drive for driving the locking element or elements (22) into an unlocking position during positioning of the coupling element (19) relative to the coupling seating (82).

7. Trailer coupling according to any of the preceding claims **characterised in that** it has a sensor array to determine a position of the coupling seating (82) and/or to detect whether the coupling element (19) is locked in the coupling seating (82).

8. Trailer coupling according to claim 7, **characterised in that** the sensor array is assigned a sensor (30), in particular an RFID reader, located on the coupling arm (18; 118), in particular the coupling element (19), for determining the position of the coupling seating (82).

9. Trailer coupling according to any of the preceding claims **characterised in that** it has a control unit (50) for activation of the positioning drive assembly (21; 127) for positioning the coupling element (19) in the coupling seating (82).

10. Trailer coupling according to claim 9, **characterised in that** the control unit (50) includes at least parts of the sensor array and/or a connection for a sensor signal of the sensor array.

11. Trailer coupling according to claim 9 or 10, **characterised in that** the control unit (50) drives the positioning drive assembly (21; 127) for positioning the coupling element (19) in the direction of the coupling seating (82) until, in particular in repeat cycles or for the purpose of post-cycling, after the coupling element (19) has already fully engaged in the coupling seating (82), until the coupling arm (18; 118) adopts the position of use (G).

12. Trailer coupling according to any of claims 9 to 11, **characterised in that** the control unit (50) is designed for sending a control signal (59) to the motor vehicle (90) instructing the motor vehicle (90) to run slowly, until the coupling arm (18; 118) reaches the position of use (G) as a result of the further driving of the positioning drive assembly (21; 127).

13. Trailer coupling according to any of claims 9 to 12, **characterised in that** the control unit (50) is designed to output at least one status signal and/or at least one control signal (59) to the motor vehicle (90), and/or to receive at least one status signal and/or at least one control signal (58) from the motor vehicle (90), wherein the status signal or signals expediently includes or include a message indicating complete engagement of the coupling element (19) in the coupling seating (82) and/or successful locking of the coupling element (19) in the coupling seating (82) and/or a position of the coupling arm, in particular the position of use (G).

14. Trailer coupling according to any of the preceding claims, **characterised in that** the positioning drive assembly (21; 127) is designed to drive the coupling arm (18; 118) into the position of use (G) when the coupling element (19) has already engaged in the coupling seating (82) of the trailer (80).

## Revendications

1. Attelage avec une fixation (11 ; 111) agencée ou pouvant être agencée au niveau d'un véhicule automobile (90), au niveau de laquelle un bras d'attelage (18 ; 118) avec un élément d'accouplement (19) est logé mobile pour venir en prise dans un logement d'attelage (82) d'un attelage (81) d'une remorque (80) au moyen d'un agencement de palier (14; 114), dans lequel le bras d'attelage (18 ; 118) fait saillie dans une position d'utilisation (G) vers l'arrière devant le véhicule automobile (90) pour l'attelage de la remorque (80), dans lequel l'agencement de palier (14 ; 114) présente dans la zone de la position d'utilisation (G) au moins un degré de liberté de pivotement et/ou au moins un degré de liberté de déplacement linéaire pour un déplacement du bras d'attelage (18 ; 118) pour un positionnement de l'élément d'accouplement (19) par rapport au logement d'attelage (82), et dans lequel l'attelage présente un agencement d'entraînement de positionnement (21 ; 127) pour l'entraînement du bras d'attelage (18; 118) et le positionnement de l'élément d'accouplement (19) dans le logement d'attelage (82) de la remorque (80), **caractérisé en ce que** le bras d'attelage (18 ; 118) est en plusieurs parties et présente une première section de bras d'attelage (40) logée mobile avec l'agencement de palier (14 ; 114) au niveau de la fixation de véhicule (11 ; 111), au niveau de laquelle une deuxième section de bras d'attelage (41) est logée mobile au moyen d'un palier de bras d'attelage (42).

2. Attelage selon la revendication 1, **caractérisé en ce que** le bras d'attelage (18 ; 118) est mobile entre la position d'utilisation (G) et une position de non-utilisation au moyen de l'agencement de palier (14 ; 114), dans lequel le bras d'attelage (18 ; 118) est déplacé dans la position de non-utilisation vers le véhicule (90), en particulier pour revenir derrière un pare-chocs (94).

3. Attelage selon la revendication 1 ou 2, **caractérisé en ce que** l'agencement de palier (14 ; 114) comprend un roulement à billes (20).

4. Attelage selon l'une quelconque des revendications précédentes, **caractérisé en ce que** l'au moins une deuxième section de bras d'attelage (41) peut être entraînée au moyen d'un entraînement de bras (43), qui forme en particulier un composant de l'agencement d'entraînement de positionnement (21 ; 127), par rapport à la première section de bras d'attelage (40) et/ou que l'agencement de palier (14 ; 114) et le palier de bras d'attelage (42) sont réalisés de sorte que l'élément d'accouplement (19) peut être introduit dans le logement d'attelage (82) par l'agencement d'entraînement de positionnement (21 ; 127) de manière sensiblement perpendiculaire à un plan de sommet supérieur du logement d'attelage (82) et/ou de manière sensiblement perpendiculaire depuis le bas.

5. Attelage selon l'une quelconque des revendications précédentes, **caractérisé en ce qu'**il présente un dispositif de verrouillage (21) pour le verrouillage du bras d'attelage (18; 118) au moins dans la position d'utilisation (G), dans lequel le dispositif de verrouillage (21) présente au moins un élément de verrouillage (22), qui entre en prise dans une position de verrouillage dans une ouverture de verrouillage (23) prévue au niveau du bras d'attelage (18 ; 118) et/ou de la fixation (11 ; 111) dans le sens d'un verrouillage.

6. Attelage selon la revendication 5, **caractérisé en ce que** l'au moins un élément de verrouillage (22) est sollicité dans la position de verrouillage par un agencement de ressort (25) et/ou qu'il présente un entraînement de verrouillage motorisé pour l'entraînement de l'au moins un élément de verrouillage (22), en particulier pour le maintien de l'au moins un élément de verrouillage (22) dans une position de déverrouillage pendant le positionnement de l'élément d'accouplement (19) par rapport au logement d'attelage (82).

7. Attelage selon l'une quelconque des revendications précédentes, **caractérisé en ce qu'**il présente un agencement de détection pour la détermination d'une position du logement d'attelage (82) et/ou pour la détection du fait si l'élément d'accouplement (19) est verrouillé dans le logement d'attelage (82).

8. Attelage selon la revendication 7, **caractérisé en ce que** l'agencement de capteur est agencé un capteur (30) agencé au niveau du bras d'attelage (18 ; 118), en particulier de l'élément d'accouplement (19), en particulier un dispositif de lecture RFID, pour la détection de la position du logement d'attelage (82).

9. Attelage selon l'une quelconque des revendications précédentes, **caractérisé en ce qu'**il présente un appareil de commande (50) pour la commande de l'agencement d'entraînement de positionnement (21 ; 127) pour le positionnement de l'élément d'accouplement (19) dans le logement d'attelage (82).

10. Attelage selon la revendication 9, **caractérisé en ce que** l'appareil de commande (50) comprend au moins des parties de l'agencement de capteur et/ou présente un raccord pour un signal de capteur de l'agencement de capteur.

11. Attelage selon la revendication 9 ou 10, **caractérisé en ce que** l'appareil de commande (50) commande l'agencement d'entraînement de positionnement (21; 127) pour le positionnement de l'élément d'accouplement (19) en direction du logement d'attelage (82) jusqu'à ce que, en particulier dans des cycles de répétition et/ou dans le sens d'un repositionnement, après que l'élément d'accouplement (19) est déjà complètement en prise dans le logement d'attelage (82), le bras d'attelage (18 ; 118) adopte la position d'utilisation (G).

12. Attelage selon l'une quelconque des revendications 9 à 11, **caractérisé en ce que** l'appareil de commande (50) est configuré pour l'envoi d'un signal de commande (59) au véhicule automobile (90), qui instruit au véhicule automobile (90) de rouler lentement, jusqu'à ce que le bras d'attelage (18 ; 118) suite à l'autre commande de l'agencement d'entraînement de positionnement (21 ; 127) atteigne la position d'utilisation (G).

13. Attelage selon l'une quelconque des revendications 9 à 12, **caractérisé en ce que** l'appareil de commande (50) est configuré pour l'émission d'au moins un signal de notification et/ou d'au moins un signal de commande (59) au véhicule automobile (90) et/ou pour la réception d'au moins un signal de notification et/ou d'au moins un signal de commande (58) du véhicule automobile (90), dans lequel l'au moins un signal de notification comprend de manière appropriée une notification sur une prise complète de l'élément d'accouplement (19) dans le logement d'attelage (82) et/ou un verrouillage réalisé de l'élément d'accouplement (19) dans le logement d'attelage (82) et/ou une position du bras d'attelage, en particulier la position d'utilisation (G).

14. Attelage selon l'une quelconque des revendications précédentes, **caractérisé en ce que** l'agencement d'entraînement de positionnement (21 ; 127) est configuré pour l'entraînement du bras d'attelage (18 ; 118) dans la position d'utilisation (G), lorsque l'élément d'accouplement (19) est déjà en prise dans le logement d'attelage (82) de la remorque (80).
